Europäisches Patentamt

European Patent Office

Office européen des brevets

(19)

(11) Publication number: **0 341 723 B1**

# EUROPEAN PATENT SPECIFICATION

(12)

(45) Date of publication of patent specification: 30.03.94

(51) Int. Cl.5: **C08F 210/16**, C08F 2/34, C08F 4/64

(21) Application number: **89108519.3**

(22) Date of filing: **11.05.89**

---

(54) **Process for the preparation of random copolymers.**

---

(30) Priority: **12.05.88 US 193092**

(43) Date of publication of application:
**15.11.89 Bulletin 89/46**

(45) Publication of the grant of the patent:
**30.03.94 Bulletin 94/13**

(84) Designated Contracting States:
**AT BE CH DE ES FR GB GR IT LI LU NL SE**

(56) References cited:
**US-A- 4 414 132**

**EUROPEAN POLYMER JOURNAL. vol. 22, no.
8, 1986, OXFORD GB pages 637 - 641;
T.YANO: 'SUPPORTED CATALYST FOR
OLEFIN POLYMERIZATION '**

(73) Proprietor: **UNION CARBIDE CORPORATION
39 Old Ridgebury Road
Danbury Connecticut 06817(US)**

(72) Inventor: **Chun-Chien Twu, Fred
1150 Emerald Road
Charleston West Virginia 25314(US)**
Inventor: **Burdett, Ian Donald
11 Estill Drive
Charleston West Virginia 25314(US)**

(74) Representative: **Weinhold, Peter, Dr. et al
Patentanwälte Dr. V. Schmied-Kowarzik
Dipl.-Ing. G. Dannenberg
Dr. P. Weinhold
Dr. D. Gudel
Dipl.-Ing. S. Schubert
Dr. P.
Barz
Siegfriedstrasse 8
D-80803 München (DE)**

---

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a process for the preparation of random copolymers of ethylene and propylene.

Homopolymers and copolymers of propylene can be prepared in high yield at high production rates by polymerizing the relevant comonomers in a low pressure gas phase fluidized bed process at temperatures in excess of 50°C employing a catalyst system comprising (i) a catalyst precursor, which includes magnesium, titanium, halogen, and an inner electron donor, i.e., a mono- or polycarboxylic acid ester; (ii) a hydrocarbylaluminum cocatalyst; and (iii) an outer electron donor or selectivity control agent, i.e., a mono- or polycarboxylic acid ester, provided that the outer electron donor is different from the inner electron donor, where the molar ratio of aluminum to selectivity control agent is in the range of 0.1:1 to 100:1 and the molar ratio of aluminum to titanium is in the range of 10:1 to 200:1.

The catalyst system can be used to produce copolymers of ethylene and propylene in which a small amount of ethylene is incorporated at random into the backbone of polypropylene. The copolymerization is generally accomplished in a fluidized bed reactor. This kind of copolymer has advantages over polypropylene homopolymer in having better clarity and better heat sealing characteristics. Further, the stiffness of the random copolymer is lower than that of the homopolymer. The primary markets for these random copolymers are in film applications and blow-molding. Recently, some injection molded products have been made with random copolymers.

In order to improve the reactivity of the catalyst system, mentioned above, and thus, its productivity, it is known to increase that portion of the copolymer which is based on ethylene. Unfortunately, the use of conventional process conditions together with this catalyst system and additional ethylene results in large, blown-up, irregular shaped agglomerated copolymer particles, which are "popcorn" like or flake" like in appearance. These particles are fairly rigid and tend not to break apart after they are formed. The irregular shape and the agglomeration are responsible for the low bulk density of the resin, and the low bulk density together with the large particle size translates into poor flow characteristics. This causes fluidization problems in the reactor, and plugs product discharge systems and other downstream equipment, to such an extent that continuous operation is essentially impossible.

An object of this invention, therefore, is to provide a process for the preparation of random copolymer of propylene and ethylene utilizing increased ethylene to provide enhanced activity, but with good flow properties.

Other objects and advantages will become apparent hereinafter.

According to the present invention, a process for the copolymerization of at least the two comonomers, propylene and ethylene, has been discovered comprising contacting the comonomers in the gas phase in at least one reaction zone, under polymerization conditions, with a catalyst system comprising (i) a catalyst precursor, which includes magnesium, titanium, halogen, and as an inner electron donor, a mono- or polycarboxylic acid ester; (ii) a hydrocarbylaluminum cocatalyst; and (iii) as an outer electron donor or selectivity control agent, a mono- or polycarboxylic acid ester, provided that the outer electron donor is different from the inner electron donor, wherein the atomic ratio of aluminum to titanium is in the range of 10:1 to 200:1,

with the proviso that the temperature in the reaction zone is in the range of 50°C to 110°C; the molar ratio of aluminum to selectivity control agent is in the range of 0.5:1 to 5:1; the propylene partial pressure is in the range of 0.345 to 3.10 MPa (50 to 450 psi); and the ethylene partial pressure is in the range of 1.72 to 172 kPa (0.25 to 25 psi).

The catalyst is made up of a catalyst precursor, which includes magnesium, titanium, a halogen, e.g., chlorine, and an electron donor; an organoaluminum compound, which can be referred to as a cocatalyst; and a selectivity control agent. The selectivity control agent is defined as an additive, which modifies the catalyst precursor in such a manner as to increase the overall percentage of isotactic crystalline polymer produced.

A description of one embodiment of the catalyst can be found in US-A-4,414,132. In this case, the catalyst precursor is obtained by halogenating a magnesium compound having the formula $MgR_{2-n}X_n$ wherein R is an alkoxide or aryloxide group, each R being alike or different, X is a halogen, and n = 0 or 1 with a tetravalent titanium halide in the presence of a halohydrocarbon and an electron donor; contacting the halogenated product with a tetravalent titanium halide; optionally treating the resulting solid with an aromatic acid chloride; washing the halogenated product to remove unreacted titanium compounds; and recovering the solid product.

The atomic or molar ratios of catalyst components are generally as follows:

| Ratio | Broad Range | Preferred Range |
|---|---|---|
| Mg to Ti | 1:1 to 50:1 | 3:1 to 30:1 |
| Cl to Mg | 1:1 to 5:1 | 2:1 to 3:1 |
| Mg to electron donor | 0.1:1 to 100:1 | 1:1 to 60:1 |
| Cocatalyst to Ti | 5:1 to 300:1 | 10:1 to 200:1 |
| Cocatalyst to selectivity control agent | 0.5:1 to 5:1 | 1:1 to 3:1 |

Suitable halogen containing magnesium compounds that can be used to prepare the catalyst precursor are alkoxy and aryloxy magnesium halides such as isobutoxy magnesium chloride, ethoxy magnesium bromide, phenoxy magnesium iodide, cumyloxy magnesium bromide, and naphthenoxy magnesium chloride.

Magnesium compounds which can be used are magnesium dialkoxides, diaryloxides, and carboxylates having 2 to 24 carbon atoms such as magnesium di-iso-propoxide, magnesium diethoxide, magnesium dibutoxide, magnesium diphenoxide, magnesium dinaphthenoxide, and ethoxy magnesium isobutoxide, magnesium dioctanoate, and magnesium dipropionate.

Magnesium compounds having one alkoxide and aryloxide group can also be employed. Examples of such compounds are ethoxy magnesium phenoxide and napthenoxide magnesium isoamyloxide. Also suitable are compounds having one carboxylate group and one alkoxide, aryloxide, or halide group such as ethoxy magnesium octanoate, phenoxy magnesium propionate, and chloromagnesium dodecanoate.

Suitable halides of tetravalent titanium include aryloxy- or alkoxy di- and -trihalides, such as dihexoxy titanium dichloride, diethoxy titanium dibromide, isopropoxy titanium triiodide, and phenoxy titanium trichloride. Titanium tetrahalides, such as titanium tetrachloride, are preferred.

The halohydrocarbons employed can be aromatic or aliphatic. Each aliphatic halohydrocarbon preferably contains from 1 to 12 carbon atoms and at least 2 halogen atoms. The aliphatic halohydrocarbons include dibromomethane, trichloromethane, 1,2-dichloroethane, dichlorobutane, 1,1,3-trichloroethane, trichlorocyclohexane, dichlorofluoroethane, trichloropropane, trichlorofluorooctane, dibromodifluorodecane, hexachloroethane, and tetrachloroisooctane. Carbon tetrachloride and 1,1,3-trichloroethane are preferred. Aliphatic halohydrocarbons containing only one halogen atom per molecule, such as butyl chloride and amyl chloride, can also be employed. Suitable aromatic halohydrocarbons include chlorobenzene, bromobenzene, dichlorobenzene, dichlorodibromobenzene, naphthyl chloride, chlorotoluene, and dichlorotoluene. Chlorobenzene is the most preferred halohydrocarbon.

Suitable electron donors, which can be used in the Mg/Ti complex (as an inner donor) or as a selectivity control agent (as an outer donor) separately or complexed with the organoaluminum compound, are mono- or polycarboxylic acid esters. It is understood, however, that the selectivity control agent (the outer donor) must be different from the electron donor, i.e., the inner donor.

Examples of these mono- and polycarboxylic acid esters are ethyl and methyl benzoate, p-methoxy ethyl benzoate, p-ethoxy methyl benzoate, p-ethoxy ethyl benzoate, ethyl acrylate, methyl methacrylate, ethyl acetate, p-chloro ethyl benzoate, p-amino hexyl benzoate, isopropyl naphthenate, n-amyl toluate, ethyl cyclohexanoate, propyl pivalate, dimethyl phthalate, diethyl phthalate, di-n-propyl phthalate, diisopropyl phthalate, di-n-butyl phthalate, diisobutyl phthalate, di-tert-butyl phthalate, diisoamyl phthalate, di-tert-amyl phthalate, dineopentyl phthalate, di-2-ethylhexyl phthalate, di-2-ethyldecyl phthalate, diethyl-1,2-fluorenedicarboxylate, diisopropyl-1-,2-ferrocene-dicarboxylate, cis-diisobutyl-cyclobutane-1,2-dicarboxylate, endo-diisobutyl-5-norbornene-2,3-dicarboxylate, and endo-diisobutyl-bicyclo[2.2.2]oct-5-ene-2,3-dicarboxylate, diisobutyl maleate, and diisoamyl citraconate.

When the electron donor for use in preparing the catalyst precursor (the inner donor) is the preferred ethyl benzoate, the preferred electron donor for use as a selectivity control agent (the outer donor) is para-ethoxy ethyl benzoate.

The hydrocarbyl aluminum cocatalyst can be represented by the formula $R_3Al$ wherein each R is an alkyl, cycloalkyl, aryl, or hydride radical; at least one R is a hydrocarbyl radical; two or three R radicals can be joined in a cyclic radical forming a heterocyclic structure; each R can be alike or different; and each R, which is a hydrocarbyl radical, has 1 to 20 carbon atoms, and preferably 1 to 10 carbon atoms. Further, each alkyl radical can be straight or branched chain and such hydrocarbyl radical can be a mixed radical, i.e., the radical can contain alkyl, aryl, and/or cycloalkyl groups. Examples of suitable radicals are: methyl, ethyl, propyl, isopropyl, butyl, isobutyl, tert-butyl, pentyl, neopentyl, hexyl, 2-methylpentyl, heptyl, octyl, isooctyl, 2-ethylhexyl, 5,5-dimethylhexyl, nonyl, decyl, isodecyl, undecyl, dodecyl, phenyl, phenethyl, methoxyphenyl, benzyl, tolyl, xylyl, naphthyl, methylnaphthyl, cyclohexyl, cycloheptyl, and cyclooctyl.

Examples of suitable hydrocarbyl aluminum compounds are as follows: triisobutylaluminum, trihexylaluminum, di-isobutylaluminum hydride, dihexylaluminum hydride, isobutylaluminum dihydride, hexylaluminum dihydride, di-isobutylhexylaluminum, isobutyl dihexylaluminum, trimethylaluminum, triethylaluminum, tripropylaluminum, triisopropylaluminum, tri-n-butylaluminum, trioctylaluminum, tridecylaluminum, tridodecylaluminum, tribenzylaluminum, triphenylaluminum, trinaphthylaluminum, and tritolylaluminum. The preferred hydrocarbyl aluminums are triethylaluminum, triisobutylaluminum, trihexylaluminum, di-isobutylaluminum hydride, and dihexylaluminum hydride.

The acid halide mentioned above is the compound corresponding to the ester compound used as the inner electron donor. Preferably, the halide is a chloride or bromide. The acid halide can contain 7 to 22 carbon atoms and one or more aromatic rings.

A modifier can be used in the catalyst system, if desired. The modifier has the formula $BX_3$ or $AlR_{(3-a)}X_a$ wherein X is chlorine, bromine, or iodine; R is an alkyl radical having 1 to 14 carbon atoms; each X and R are alike or different; and a is 0, 1, or 2. Preferred modifiers include alkylaluminum mono- and dichlorides wherein each alkyl radical has 1 to 6 carbon atoms, and boron trichloride. A particularly preferred modifier is diethyl aluminum chloride. A total of 0.1 to 10 moles, and preferably 0.2 to 2.5 moles, of modifier is used per mole of inner electron donor. When the modifier is used it is considered to be part of the titanium complex.

The polymer is prepared in the gas phase, generally, by continuously contacting the catalyst system with at least the two comonomers, propylene and ethylene, in one or more fluidized bed reactors such as that described in US-A-4,482,687 or another conventional reactor for the gas phase production of, for example, polypropylene or propylene copolymers.

Other comonomers can be included in the propylene/ethylene copolymer. In this specification, the term "copolymer" is considered to mean a polymer based on two or more comonomers. The additional comonomers can be alpha-olefins having 4 to 12 carbon atoms or conjugated or non-conjugated dienes containing 5 to 25 carbon atoms. Useful alpha-olefins preferably do not contain any branching on carbon atoms closer than two carbon atoms removed from the double bond. Examples of suitable alpha-olefins include 1-butene, 1-hexene, 4-methylpentene-1, 1-heptene, and 1-octene. Examples of the dienes are 1,4-pentadiene, 1,4-hexadiene, 1,5-hexadiene, dicyclopentadiene, cyclohexadiene, 1-vinyl-1-cyclopentene, and the alkylbicyclononadienes, indenes, and norbornenes. Ethylidene norbornene is an example of the latter. The non-conjugated dienes are preferred.

In the copolymer, the portion attributed to propylene is in the range of 80 to 99.5 percent by weight based on the weight of the copolymer and is preferably in the range of 90 to 99.5 percent by weight; the portion attributed to ethylene is in the range of 0.5 to 20 percent by weight and is preferably in the range of 0.5 to 10 percent by weight; and the portion attributed to other comonomers, if any, is in the range of 0.5 to 20 percent by weight. All percentages are based on the weight of the random copolymer.

The amount of ethylene incorporated into the copolymer, i.e., the portion of the copolymer based on ethylene, is arrived at by determining the crystalline melting point of the copolymer. This melting point is measured with a Differential Scanning Calorimeter (DSC). The melting point of propylene homopolymer varies between 161°C and 165°C depending on crystallinity while the melting point of $C_3/C_2$ random copolymer is depressed as the amount of incorporated ethylene increases and, as a rule of thumb, 5°C in melting point depression corresponds to one weight percent of ethylene incorporation. The DSC or crystalline melting point is found to be a linear function of the ethylene to propylene gas phase molar ratio. Therefore, the weight percent of ethylene incorporation is also linearly proportional to the ethylene to propylene gas phase molar ratio.

The bed is usually made up of the same granular resin that is to be produced in the reactor. Thus, during the course of the polymerization, the bed comprises formed polymer particles, growing polymer particles, and catalyst particles fluidized by polymerizable and modifying gaseous components introduced at a flow rate or velocity sufficient to cause the particles to separate and act as a fluid. The fluidizing gas is made up of the initial feed, make-up feed, and cycle (recycle) gas, i.e., monomer and, if desired, modifiers and/or an inert carrier gas.

The essential parts of the reactor are the vessel, the bed, the gas distribution plate, inlet and outlet piping, a compressor, a cycle gas cooler, and a product discharge system. In the vessel, above the bed, there is a velocity reduction zone, and in the bed, a reaction zone. Both are above the gas distribution plate. The ethylene is preferably introduced into the reactor by means of a syringe continuous feeder.

The fluidized bed, or other gas phase, reactor is operated at a temperature in the range of 50°C to 110°C and preferably at a temperature in the range of 60°C to 90°C. The operating pressure is in the range of 1.72 to 4.13 MPa gauge (250 psig to 600 psig) or higher and preferably 2.07 to 3.79 MPa gauge (300 psig to 550 psig). The partial pressure of the propylene is in the range of 0.345 to 3.10 MPa (50 to 450 psi) and is preferably 0.69 to 2.76 MPa (100 to 400 psi). The partial pressure of ethylene is in the range of 1.72 to 172 kPa (0.25 to 25 psi) and is preferably 6.9 to 103 kPa (1 to 15 psi). The total partial pressure of other comonomers can be 3.45 to 516 kPa (0.5 to 75 psi). The molar ratio of ethylene to propylene is 0.005 to 0.065 and is preferably 0.01 to 0.045. The superficial gas velocity, which can be calculated by measuring cycle gas flow, is, generally, maintained in the range of 3 cm to 1.5 m (0.1 to 5 feet) per second and is preferably in the range of 3 cm to 60 cm (0.5 to 2 feet) per second. The superficial gas velocity is preferably used together with a slow transition in order to optimize the results. In other words, the ethylene concentration in the gas phase is increased slowly to the desired level for the product.

The residence time of the alpha-olefin in the reactor is in the range of 1 to 20 hours and preferably 2 to 6 hours. The velocity of the fluidizing gas is in the range of 3 cm to 1.5 m (0.1 to 5.0 feet) per second or higher and preferably 3 to 75 cm (0.5 to 2.5 feet) per second. Hydrogen or another chain transfer agent can be used in the process. The molar ratio of hydrogen to alpha-olefin used in the fluidized bed reactor is in the range of 0.0005:1 to 0.2:1 and is preferably in the range of 0.01:1 to 0.1:1. This translates into a hydrogen partial pressure in the range of 0.69 to 1.378 kPa (0.1 psi to 200 psi) and preferably 3.45 to 345 kPa (0.5 psi to 50 psi). The balance of the operating pressure utilized in the reactor, i.e., after the partial pressure of propylene, ethylene, and, if used, other comonomers and the hydrogen partial pressure are considered, can be made up by using an inert gas such as nitrogen.

Where it is desired to produce the propylene/ethylene random copolymer only, one fluidized bed reactor is used. In the case of impact grade copolymers, a second fluidized bed reactor is needed.

In subject process, the components of the catalyst system are maintained in an amount such that the atomic ratio of aluminum in the cocatalyst to silicon in the selectivity control agent is 0.5:1 to 5:1, and preferably is 1:1 to 3:1, and the atomic ratio of aluminum in the cocatalyst to titanium in the solid catalyst component is 5:1 to 300:1, and is preferably 10:1 to 200:1.

The results which can be obtained by the use of the above enumerated parameters are as follows:

Melt Flow Rate can be in the range of 0.01 to 1000 and is preferably in the range of 0.05 to 500. It is determined under ASTM D-1238, Condition L, measured at 230°C with a 2160 gram load, and reported as grams per 10 minutes (g/10min).

Average Particle Size can be in the range of 0.127 mm to 1.27 cm (0.005 to 0.5 inch) and is preferably in the range of 0.254 to 2.03 mm (0.01 to 0.08 inch). Average particle size is determined as follows: pass the powders through a series of ASTM standard sieves, weigh the retained particles on each sieve, and calculate the number average particle size.

Settled Bulk Density can be in the range of 83.5 to 584.5 kg/m$^3$ (5 to 35 pounds per cubic foot) and is preferably in the range of 250.5 to 417.5 kg/m$^3$ (15 to 25 pounds per cubic foot). Settled bulk density is determined as follows: a resin sample of a fixed volume is collected and weighed. Bulk density is calculated by dividing the weight by the volume.

Production Rate can be 2,265 to 18,120 kg (5 to 40 times 1000 pounds) of copolymer per hour and is preferably 4,530 to 13,590 kg (10 to 30 times 1000 pounds) of copolymer per hour. Production rate is determined by weighing the resin produced every hour.

Xylene Solubles are held to a maximum of 50 percent by weight based on the weight of the copolymer and is preferably maintained at a level no higher than 30 percent by weight. Xylene solubles are defined as the percent by weight that stays in solution after the copolymer sample is dissolved in hot xylene and the solution is allowed to cool to 23°C. Low xylene solubles are desired to avoid a phenomenon called "plate-out", which is a migration of the low molecular weight species to the surface of the resin during processing. This can occur if the xylene solubles value becomes excessive.

FDA % hexane extractables are maintained at a level no higher than 20 percent by weight based on the weight of the copolymer and is preferably kept at a level no higher than 5.5 percent by weight. A film sample of the copolymer 0.076 to 0.102 mm (3 to 4 mils)in thickness (prepared by chill roll extrusion) is extracted at 50°C in n-hexane for 2 hours and then filtered. The filtrate is evaporated and the total residue weighed as a measure of the n-hexane extractable fraction.

The advantages of the invention are essentially no fluidization problems or plugging; stable, continuous operation; acceptable morphology, i.e., small particle size, regular particle shape, and higher settled bulk density; increased catalyst productivity; acceptable xylene solubles level; high ethylene content; wider product compositional range; reasonable production rate; and low odor levels.

The invention is illustrated by the following examples:

<u>Examples 1 to 6</u>

A prepared catalyst precursor having the following approximate composition:

$TiCl_4 \bullet 12 \ MgCl_2 \bullet 2 \ C_6H_5COOC_2H_5$,

premixed in a mix tank, is continuously fed into a fluidized bed reactor as a 30 percent by weight dispersion in mineral oil. Simultaneously, and continuously, triethylaluminum cocatalyst as a 2.5 percent by weight solution in isopentane and para-ethoxy ethyl benzoate (selectivity control agent) as a 1.0 percent by weight solution in isopentane are also added to the reactor.

Sufficient precursor, cocatalyst, and selectivity control agent are introduced into the reactor to maintain the molar ratios of aluminum to selectivity control agent (SCA) and of triethylaluminum (TEAL) to titanium set forth in the Table.

Propylene, ethylene, hydrogen, and nitrogen are added to maintain a specified total pressure. The total pressure and partial pressures of propylene and ethylene are mentioned in the Table as well as the hydrogen/propylene molar ratio. The balance of the total pressure is made up with nitrogen. The gas feed is accomplished through the use of orifice and motor valves.

The reactor is a pilot scale model, 35.6 cm (14 inches) in diameter and 8.4 m (28 feet) in height. It is operated in the condensing mode. Condensing mode operation is described in US-A-4,543,399 and 4,588,790 wherein the recycle gas stream is intentionally cooled to a temperature at or below the dew point of the recycle gas stream to produce a two-phase gas/liquid mixture under conditions such that the liquid phase of said mixture will remain entrained at least from the point of entry until it passes into the fluidized bed.

Variables and results are set forth in the Table.

Notes with respect to the Table:

1. The temperature maintained in the reactor is given in degrees Centigrade ($°C$).

2. SCA = selectivity control agent

3. TEAL = triethyl aluminum

4. The residence time of each 0.45 kg (pound) of propylene and ethylene, combined, in the reactor is given in hours (hrs).

5. The parts per million (ppm) of copolymer (by weight) of titanium is given. The ppm of titanium are determined by the spectrophotometric method.

6. DSC melting point ($°C$) is determined by heating a small sample in a differential scanning calorimeter at a constant rate, cooling at a constant rate, and reheating at a constant rate.

7. Ethylene (%) = the portion of the copolymer, in percent by weight, attributed to ethylene. It is estimated from the DSC melting point.

TABLE

| Example | 1 | 2 | 3 | 4 | 5 | 6 |
|---|---|---|---|---|---|---|
| temperature (°C) | 75 | 55 | 62 | 62 | 58 | 65 |
| total pressure, (psia) $MPa_{absolute}$ | 2.17(315) | 2.17(315) | 3.03(440) | 3.03(440) | 3.03(440) | 3.03(440) |
| propylene partial pressure, (psia) $MPa_{absolute}$ | 1.0(145) | 1.19(172) | 2.43(352) | 2.47(358) | 2.48(360) | 2.07(301) |
| ethylene partial pressure, (psia) $kPa_{absolute}$ | 80.6(11.7) | 41.3(6.0) | 82.0(11.9) | 78.5(11.4) | 93.7(13.6) | 84.7(12.3) |
| ethylene (% by wt. of total gases) | 3.7 | 1.9 | 2.7 | 2.6 | 3.1 | 2.8 |
| ethylene/propylene molar ratio (x100) | 0.08/1 | 0.035/1 | 0.034/1 | 0.032/1 | 0.037/1 | 0.041/1 |
| aluminum/SCA molar ratio | 1.9/1 | 2.0/1 | 1.8/1 | 2.1/1 | 1.5/1 | 1.8/1 |
| hydrogen/propylene molar ratio (x1000) | 23.0/1 | 22.0/1 | 68.0/1 | 64.0/1 | 59.0/1 | 54.0/1 |
| TEAL/titanium molar ratio | 54.0/1 | 43.0/1 | 45.0/1 | 93.0/1 | 55.0/1 | 55.0/1 |
| residence time (hours) | 1.9 | 1.7 | 2.1 | 1.6 | 1.4 | 2.4 |
| **Resin Properties** | | | | | | |
| Melt Flow Rate (g/10 min) | 4 to 5 | 4.5 | 2.7 | 4.7 | 1.6 | 2.9 |
| Settled Bulk Density, (lbs/cu.ft.) $kg/m^3$ | 262(15.7) | 313(19.1) | 289(17.3) | 251(15.0) | 262(15.7) | 284(17.0) |
| Average Particle Size, (inch) $mm$ | 1.5(0.06) | 0.69(0.027) | 0.96(0.038) | 0.69(0.027) | – | 0.74(0.029) |
| Titanium Residue (ppm) | 6.4 | 5.0 | 4.7 | 2.2 | 2.2 | 3.8 |
| Xylene Solubles (%) | 33.3 | 19.2 | 8.2 | 9.9 | 9.3 | 11.6 |
| DSC melting point (°C) | 116 | 139.2 | 140 | 137.2 | 135.3 | 130 |
| ethylene (%) | 9 to 10 | 4.7 | 4.6 | 5.2 | 5.5 | 6.6 |

## Claims

1. A process for the copolymerization of at least the two comonomers, propylene and ethylene, comprising contacting the comonomers in the gas phase in at least one reaction zone, under polymerization conditions, with a catalyst system comprising (i) a catalyst precursor, which includes magnesium, titanium, halogen, and as an inner electron donor, a mono- or polycarboxylic acid ester; (ii) a hydrocarbylaluminum cocatalyst; and (iii) as a selectivity control agent, a mono- or polycarboxylic acid ester, provided that the selectivity control agent is different from the inner electron donor, wherein the atomic ratio of aluminum to titanium is in the range of 5:1 to 300:1,

with the proviso that the temperature in the reaction zone is in the range of 50°C to 110°C; the molar ratio of aluminum to selectivity control agent is in the range of 0.5:1 to 5:1; the propylene partial pressure is in the range of 0,345 to 3.10 MPa (50 to 450 psi); and the ethylene partial pressure is in the range of 1,72 to 172 kPa (0.25 to 25 psi).

2. The process defined in claim 1 wherein the molar ratio of aluminum to selectivity control agent is in the range of 1:1 to 3:1.

3. The process defined in one or both of the claims 1-2 wherein the temperature in the reaction zone is in the range of 60°C to 90°C.

4. The process defined in one or more of the claims 1-3 wherein the propylene partial pressure is in the range of 0.69 to 2.76 MPa (100 to 400 psi).

5. The process defined in one or more of the claims 1-4 wherein the ethylene partial pressure is in the range of 6.9 to 103 kPa (1 to 15 psi).

6. The process defined in one or more of the claims 1-5 wherein the process is carried out continuously and the reaction zone is a fluidized bed.

7. The process defined in one or more of the claims 1-6 wherein the hydrocarbyl aluminum cocatalyst is a trialkylaluminum compound.

8. The process defined in one or more of the claims 1-7 wherein the inner electron donor is ethyl benzoate and the selectivity control agent is para-ethoxy ethyl benzoate.

9. The process defined in one or more of the claims 1-8 wherein the hydrocarbyl aluminum cocatalyst is triethylaluminum.

10. The process defined in one or more of the claims 1-9 wherein the catalyst system includes a modifier having the formula $BX_3$ or $AlR_{(3-a)}X_a$ wherein X is chlorine, bromine, or iodine; R is an alkyl radical having 1 to 14 carbon atoms; each X and R are alike or different; and a is 0, 1, or 2.

**Patentansprüche**

1. Verfahren zur Copolymerisation von wenigstens den beiden Comonomeren Propylen und Ethylen, welches das Kontaktieren der Comonomere in der Gasphase in wenigstens einer Reaktionszone unter Polymerisationsbedingungen mit einem Katalysatorsystem umfaßt, das (i) einen Katalysator-Vorläufer, der Magnesium, Titan, Halogen und als einen inneren Elektronendonator einen Mono- oder Polycarbonsäureester enthält; (ii) einen Hydrocarbylaluminium-Cokatalysator; und (iii) als ein Selektivitätssteuerungsmittel einen Mono- oder Polycarbonsäureester umfaßt, unter der Voraussetzung, daß sich das Selektivitätssteuerungsmittel von dem Elektronendonator unterscheidet, worin das Atomverhältnis von Aluminium zu Titan im Bereich von 5 : 1 bis 300 : 1 liegt; wobei jedoch die Temperatur in der Reaktionszone im Bereich von 50° C bis 100° C liegt; das Molverhältnis von Aluminium zu dem Selektivitätssteuerungsmittel im Bereich von 0,5 : 1 bis 5 : 1 liegt; der Propylen-Partialdruck im Bereich von 0,345 bis 3,10 MPa (50 bis 450 psi) liegt; und der Ethylen-Partialdruck im Bereich von 1,72 bis 172 kPa (0,25 bis 25 psi) liegt.

2. Verfahren nach Anspruch 1, worin das Molverhältnis von Aluminium zu dem Selektivitätssteuerungsmittel im Bereich von 1 : 1 bis 3 : 1 liegt.

3. Verfahren nach einem oder beiden der Ansprüche 1 - 2, worin die Temperatur in der Reaktionszone im Bereich von 60° C bis 90° C liegt.

**4.** Verfahren nach einem oder mehreren der Ansprüche 1 - 3, worin der Propylen-Partialdruck im Bereich von 0,69 bis 2,76 Mpa (100 bis 400 psi) liegt.

**5.** Verfahren nach einem oder mehreren der Ansprüche 1 - 4, worin der Ethylen-Partialdruck im Bereich von 6,9 bis 103 kPa (1 bis 15 psi) liegt.

**6.** Verfahren nach einem oder mehreren der Ansprüche 1 - 5, worin das Verfahren kontinuierlich durchgeführt wird und die Reaktionszone ein Wirbelbett ist.

**7.** Verfahren nach einem oder mehreren der Ansprüche 1 - 6, worin der Hydrocarbylaluminium-Cokatalysator eine Trialkylaluminiumverbindung ist.

**8.** Verfahren nach einem oder mehreren der Ansprüche 1 - 7, worin der innere Elektronendonator Ethylbenzoat und das Selektivitätssteuerungsmittel para-Ethoxyethylbenzoat ist.

**9.** Verfahren nach einem oder mehreren der Ansprüche 1 - 8, worin der Hydrocarbylaluminium-Cokatalysator Triethylaluminium ist.

**10.** Verfahren nach einem oder mehreren der Ansprüche 1- 9, worin das Katalysatorsystem ein Modifizierungsmittel mit der Formel $BX_3$ oder $AlR_{(3-a)}X_a$ umfaßt, worin X Chlor, Brom oder Jod ist; R ein Alkylradikal mit 1 bis 14 Kohlenstoffatomen ist; X und R jeweils gleich oder verschieden sein können und a = 0, 1 oder 2 bedeutet.

**Revendications**

**1.** Procédé pour copolymériser au moins les deux comonomères propylène et éthylène, comprenant la mise en contact des comonomères en phase gazeuse dans au moins une zone de réaction, dans des conditions de polymérisation, avec un système catalyseur comprenant (i) un précurseur de catalyseur, qui contient du magnésium, du titane, un halogène et, comme donneur interne d'électrons, un ester d'acide monocarboxylique ou polycarboxylique ; (ii) un cocatalyseur du type hydrocarbylaluminium ; et (iii) comme agent réglant la sélectivité, un ester d'acide monocarboxylique ou polycarboxylique, sous réserve que l'agent de réglage de sélectivité soit différent du donneur interne d'électrons, le rapport atomique de l'aluminium au titane étant compris dans la plage de 5:1 à 300:1,
sous réserve que la température dans la zone de réaction se situe dans la plage de 50°C à 110°C ; que le rapport molaire de l'aluminium à l'agent réglant la sélectivité se situe dans la plage de 0,5:1 à 5:1 ; que la pression partielle de propylène se situe dans la plage de 0,345 à 3,10 mPa (50 à 450 lb/in²) ; et que la pression partielle d'éthylène se situe dans la plage de 1,72 à 172 kPa (0,25 à 25 lb/in²).

**2.** Procédé suivant la revendication 1, dans lequel le rapport molaire de l'aluminium à l'agent réglant la sélectivité se situe dans la plage de 1:1 à 3:1.

**3.** Procédé suivant l'une des revendications 1 et 2 ou les deux, dans lequel la température dans la zone de réaction se situe dans la plage de 60°C à 90°C.

**4.** Procédé suivant une ou plusieurs des revendications 1 à 3, dans lequel la pression partielle de propylène se situe dans la plage de 0,69 à 2,76 MPa (100 à 400 lb/in²).

**5.** Procédé suivant une ou plusieurs des revendications 1 à 4, dans lequel la pression partielle d'éthylène se situe dans la plage de 6,9 à 103 kPa (1 à 15 lb/in²).

**6.** Procédé suivant une ou plusieurs des revendications 1 à 5, dont la mise en oeuvre est continue et dont la zone de réaction est un lit fluidisé.

**7.** Procédé suivant une ou plusieurs des revendications 1 à 6, dans lequel le cocatalyseur du type hydrocarbylaluminium est un trialkylaluminium.

9

**8.** Procédé suivant une ou plusieurs des revendications 1 à 7, dans lequel le donneur interne d'électrons est le benzoate d'éthyle et l'agent réglant la sélectivité est le para-éthoxybenzoate d'éthyle.

**9.** Procédé suivant une ou plusieurs des revendications 1 à 8, dans lequel le cocatalyseur du type hydrocarbylaluminium est le triéthylaluminium.

**10.** Procédé suivant une ou plusieurs des revendications 1 à 9, dans lequel le système catalyseur comprend un modificateur de formule $BX_3$ ou $AlR_{(3-a)}X_a$ dans laquelle X est le chlore, le brome ou l'iode ; R est un radical alkyle ayant 1 à 14 atomes de carbone ; les radicaux X et R sont identiques ou différents ; et $\underline{a}$ a la valeur 0, 1 ou 2.